(19) Europäisches Patentamt
European Patent Office
Office européen des brevets

(11) **EP 1 758 030 B1**

(12) **EUROPEAN PATENT SPECIFICATION**

(45) Date of publication and mention
of the grant of the patent:
**27.05.2009 Bulletin 2009/22**

(51) Int Cl.:
***G06F 17/14*** *(2006.01)*     ***G06F 17/15*** *(2006.01)*

(21) Application number: **05255167.8**

(22) Date of filing: **22.08.2005**

(54) **Dynamically reconfigurable shared baseband engine**

Dynamisch rekonfigurierbare und geteilte Vorrichtung für die Basisband-Verarbeitung

Unité partagée et dynamiquement reconfigurable pour le traitement en bande de base

(84) Designated Contracting States:
**DE GB**

(43) Date of publication of application:
**28.02.2007 Bulletin 2007/09**

(73) Proprietor: **Panasonic Corporation
Kadoma-shi
Osaka 571-8501 (JP)**

(72) Inventor: **Al-Adnani, Adnan
Wokingham,
Berkshire RG40 2AQ (GB)**

(74) Representative: **Haley, Stephen
Gill Jennings & Every LLP
Broadgate House
7 Eldon Street
London EC2M 7LH (GB)**

(56) References cited:
**US-A1- 2003 154 357**

• **SHU-SHIN CHIN ET AL: "Rapidly reconfigurable coarse-grained FPGA architecture for digital filtering applications" THE 2002 45TH. MIDWEST SYMPOSIUM ON CIRCUITS AND SYSTEMS. CONFERENCE PROCEEDINGS. TULSA, OK, AUG. 4 - 7, 2002, MIDWEST SYMPOSIUM ON CIRCUITS AND SYSTEMS, NEW YORK, NY : IEEE, US, vol. VOL. 1 OF 3, 4 August 2002 (2002-08-04), pages 203-206, XP010635533 ISBN: 0-7803-7523-8**

**Description**

The present invention is directed to a dynamically reconfigurable shared baseband engine for a communications system.

There is a current trend in mobile consumer equipment towards increased wireless services using different standards which are continuously updated. The trend has created the need for multimode terminals which can provide seamless connectivity between functions that can be updated according to user needs. Conventional multimode terminals employing fixed Application-Specific Integrated Circuits (ASICs) for each mode are bulky, expensive to implement and are not upgradeable.

Reconfigurable architecture is also becoming a prominent feature in System-on-Chip design platforms. Applying shared reconfigurable architecture to the implementation of not only dataflow intensive computation but also control oriented and data stream based computation is an approach which is providing significant benefits to System-on-Chip designs, where the need to maximise the concurrent use of resources and to minimise redundancy is paramount.

Reconfigurable processing is a well known concept. General-purpose processors use some of the same basic ideas, such as reusing computational components for independent computations, and using multiplexers to control the routing between these components. However, the term "Reconfigurable Processing" as it is used in current research refers to systems incorporating some form of hardware programmability, customizing how the hardware is used utilising a number of physical control points. These control points can then be changed periodically in order to execute different applications using the same hardware.

Reconfigurable systems are usually formed with a combination of reconfigurable logic and a general-purpose microprocessor. The processor performs the operations which cannot be done efficiently by the reconfigurable logic, such as data-dependent control and memory access, while the computational cores are mapped to the reconfigurable hardware. This reconfigurable logic can be supported either by commercial FPGAs or by custom configurable hardware.

The Fast Fourier Transform (FFT) is one of the fundamental operations in the algorithms used in communication protocols based on Orthogonal Frequency Division Multiplexing (OFDM). In the wireless domain, OFDM is used in the newer for successors to 3G cellular communications systems. In broadcasting, OFDM is used DAB, DVB-T, and the new handheld DVB-H standards. In the wired area, OFDM is referred to as discrete multi-tone (DMT) and is the basis for the ADSL standard.

Each of these systems require high-speed FFT processing blocks. However, time-to-market pressure often drives vendors to release products that comply with early versions of a standard, thus locking down an FFT architecture. The problem is that as standards change, FFT architectures can also change. Thus, there is a need to implement a flexible FFT architecture in order to account for potential spec changes. For example, 802.16e has recently shifted from a constant FFT size (256 for OFDM, 2048 for OFDMA) to a scalable physical layer (PHY), the FFT size shifting for different channel bandwidths with a maximum of either 1024 or 2048. This demands a solution that can be implemented on programmable silicon: The key components of an FFT processor are an FFT memory unit and a twiddle factor ROM.

Another very popular standard is the Universal Mobile Telecommunications Service (UMTS). The UMTS 3G mobile communications standard is based on Code Division Multiple Access (CDMA) spread spectrum technology. For demodulation, CDMA based systems use a Rake receiver, which is considered one of the most computationally demanding processing blocks in the system. A Rake receiver consists of several branches (RAKE Fingers) each of which is assigned to a different receive path. Each Rake finger in a UMTS system comprises a downsampler, decorrelators, channel estimators and combiners. All these operations can be performed by using a combination of Multiply-Accumulate (MAC) blocks and complex adders.

Thus, as seen above, because of current trends in mobile telecommunications, there is a need to provide a reconfigurable processing block which could be used for both OFDM systems which require FFT processing blocks and UMTS systems which require MAC blocks and complex adder blocks. Also, because of the trend towards creating more efficient and compact receivers, there is also a need to create a reconfigurable multimode system using share processing resources. Other prior art systems can be found disclosed in "Rapidly Reconfigurable Coarse Grained FPGA Architecture for Digital Filtering Applications", SHU-SHIN ET AL, Midwest Symposium on Circuits and Systems and US 2003/154357.

Thus, there is a clear need for a shared baseband architecture that can be dynamically reconfigured to implement the multiple functions required for both OFDM and UMTS systems and to achieve the flexibility required to reconfigure a system dynamically with reduced fixed processing blocks (ASICs) as in the prior art.

In order to attain this objective, the present invention provides a reconfigurable processing block according to claim 1.

The present invention also provides a reconfigurable baseband engine for use in a communications system capable of supporting multiple communication formats, the reconfigurable baseband engine comprises a plurality of the reconfigurable processing block according to any of claims 1 to 4.

In the drawings:

Figure 1 is a block diagram of a recursive Fast Fourier Transform processor according to the prior art.
Figure 2 is a block diagram of a radix-2 butterfly according to the prior art.

Figure 3 is a block diagram of a Rake Receiver according to the prior art.

Figure 4 is a block diagram of a finger of the Rake Receiver of figure 3.

Figure 5 is a block diagram of a Multiply Accumulate (MAC) processing block according to the prior art.

Figure 6 is a block diagram of a general reconfigurable system according to the prior art.

Figure 7 is a block diagram of a dynamically reconfigurable shared baseband engine according to a first embodiment of the present invention.

Figure 8 is a table defining the data signals for the dynamically reconfigurable shared baseband engine of figure 7.

Figure 9 is a table defining the control signals for the dynamically reconfigurable shared baseband engine of figure 7.

Figure 10 is a block diagram of the dynamically reconfigurable shared baseband engine of figure 7, whilst in radix-2 butterfly mode.

Figure 11 is a block diagram of the dynamically reconfigurable shared baseband engine of figure 7, whilst in pn-correlator mode.

Figure 12 is a block diagram of the dynamically reconfigurable shared baseband engine of figure 7, whilst in auto-correlator mode.

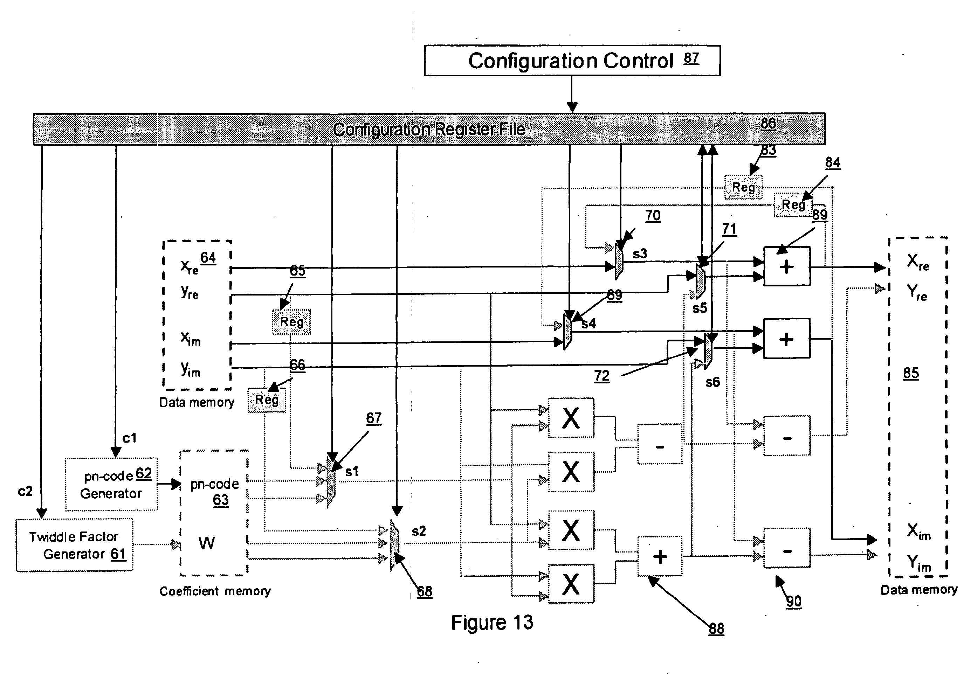

Figure 13 is a block diagram of the dynamically reconfigurable shared baseband engine of figure 7, whilst in complex adder mode.

Figure 14 is a block diagram of a dual core dynamically reconfigurable shared baseband engine according to a second embodiment of the present invention.

Figure 15 is a table defining the control signals for the dynamically reconfigurable shared baseband engine of figure 14.

Two approaches exist for reducing a Discreet Fourier Transform (DFT) into a series of simpler calculations. The first is to perform decimation in frequency and the second is to perform decimation in time. Both approaches require the same number of complex multiplications and additions. The key difference between the two approaches is that decimation in time takes bit-reversed inputs and generates normal-order outputs, whereas decimation in frequency takes normal-order inputs and generates bit-reversed outputs. The manipulation of inputs and outputs is carried out by what is known as butterfly stages. The use of each butterfly stage involves multiplying an input by a complex twiddle factor, $e^{-j2pn/N}$.

A typical software implementation of an FFT involves block-based processing because of the need for the processor to be shared between baseband processing and other tasks. Thus, any change to the implementation may adversely affect the whole system. Conversely, a hardware implementation of the FFT typically involves dedicated logic in the form of a pipeline with buffering in each of the butterfly stages.

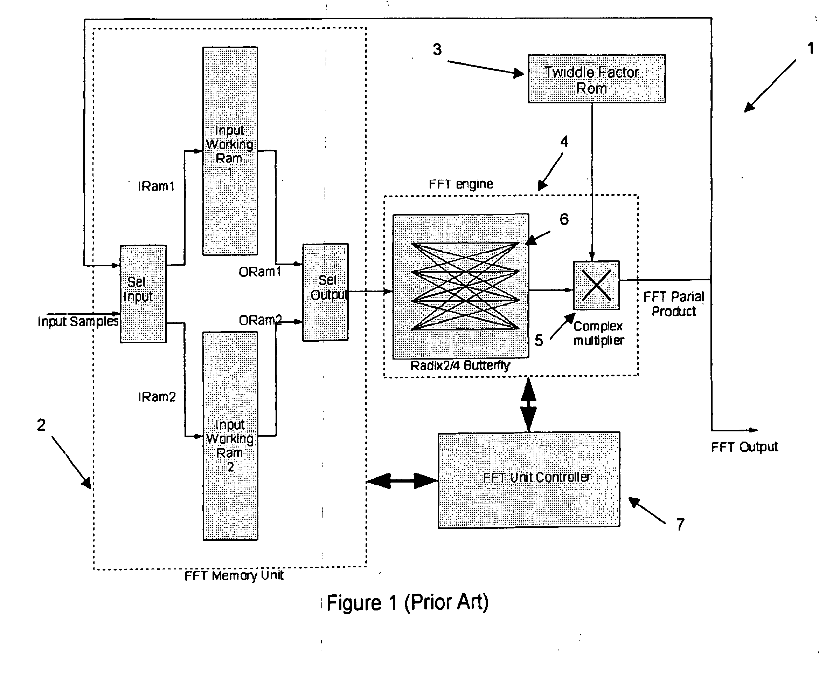

With reference to figure 1, a typical hardware recursive FFT processor 1 comprises an FFT memory unit 2 for storing incoming OFDM symbols while the processor processes an available OFDM symbol. The input samples are usually coded using 12 to 16 bits. A typical recursive FFT processor 1 also comprises twiddle factor ROM 3, an FFT engine 4 comprises both a Radix-2/4 butterfly 6 and a complex multiplier 5. Also, the operation of the recursive FFT processor 1 is controlled by an FFT unit controller 7.

The Fourier transform operation done on a NFFT-point is given by the expression:

$$X(k) = \sum_{n=0}^{N_{FFT}-1} x(n) * W_{N_{FFT}}^{nk}$$

where the twiddle factors, are given by

$$W_{N_{FFT}}^{nk} = \exp\left(\frac{-2j\pi nk}{N_{FFT}}\right), j = \sqrt{-1}$$

Typically, the twiddle factors are coded on a number of bits ranging from 13 to 16 bits. The ROM size can be reduced by using known symmetrical properties and the fact that, in some cases, the twiddle factors are merely equal to 1, -1, j or -j.

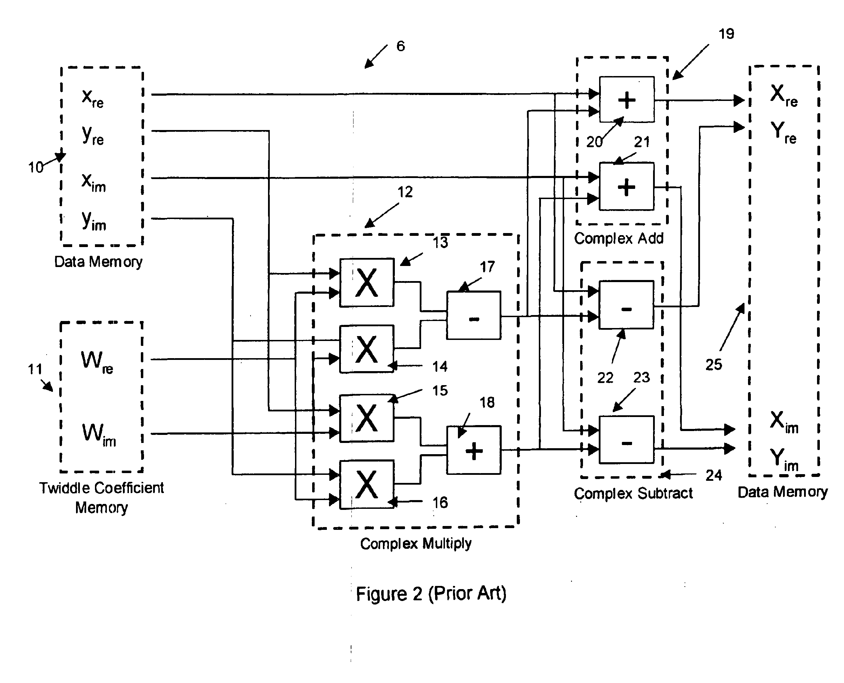

Known FFT algorithms consist of decomposing an NFFT-point DFT into NFFT/2 two-point DFTs (radix-2) or NFFT/4 four-point DFTs (radix-4), which are then recombined recursively through a butterfly circuit until reaching the result of the NFFT-point DFT. Now, with reference to figure 2, a radix-2 butterfly circuit 6 comprises input data memory 10, output data memory 25 and twiddle coefficient memory 11 for storing complex twiddle factors. The radix-2 butterfly circuit 6 also comprises one complex multiplier block 12, consisting of four single multipliers 13, 14, 15, 16, a substracter 17 and an adder 18. The complex output of the complex multiplier block 12 is input into both a complex add block 19, consisting of two adders 20 and 21 and a complex subtract block 24, consisting of two substracters 22 and 23.

The above processing elements form the basic building blocks for the implementation of an FFT and, consequently, any OFDM communications system. As has been appreciated by the applicant, many of the processing elements which are found in the implementation of an FFT are also found in the Rake receiver.

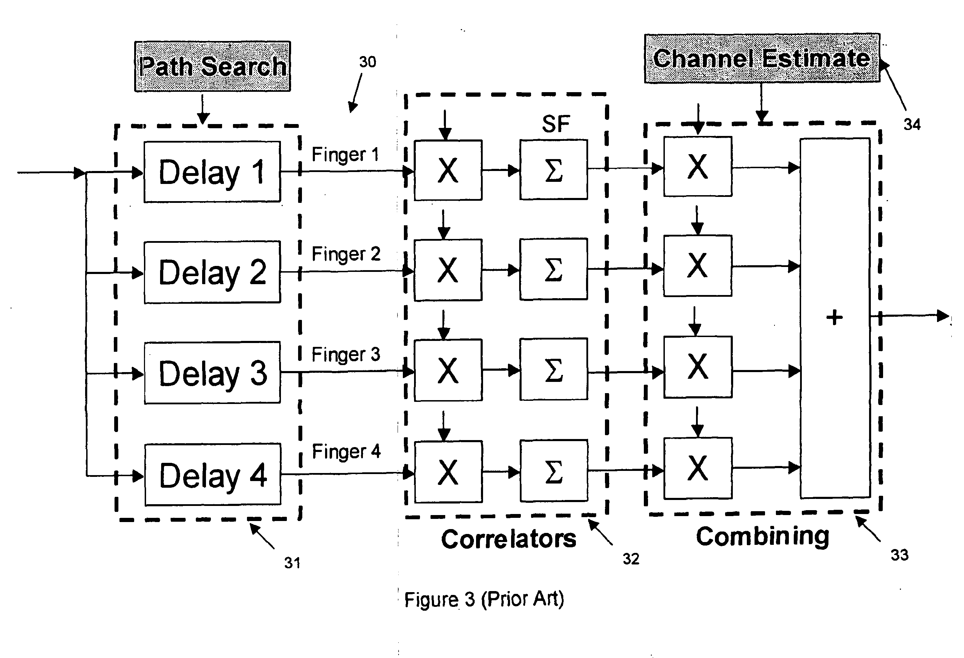

The UMTS 3G mobile communications standard is based on CDMA technology. With reference to figure 3, CDMA uses a Rake receiver 30 for demodulating incoming signals. The Rake algorithm is a conceptually simple algorithm, however, due to its use of correlators and its recursive nature, its computational complexity increases linearly with the number of multi-path components being processed.

A Rake receiver consists of several branches (RAKE Fingers) each of them assigned to a different receive path. The outputs of the different RAKE fingers are aligned in time and coherently combined. This process starts with the multipaths being aligned by adjusting the delays using information from a path search algorithm which finds the strongest paths and their respective time delays. Then, the correlators multiply the aligned paths with the spreading factors and sums across the spreading factor length to recover the symbols. The combiner then multiplies the symbol paths with information from the channel estimator to correct the phase. Finally, all the paths are summed up to recover the corrected data symbols.

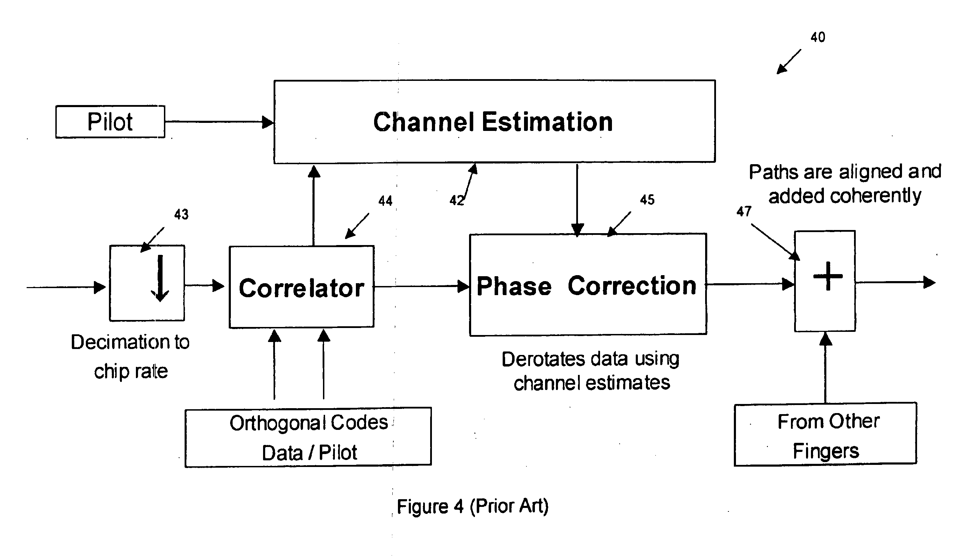

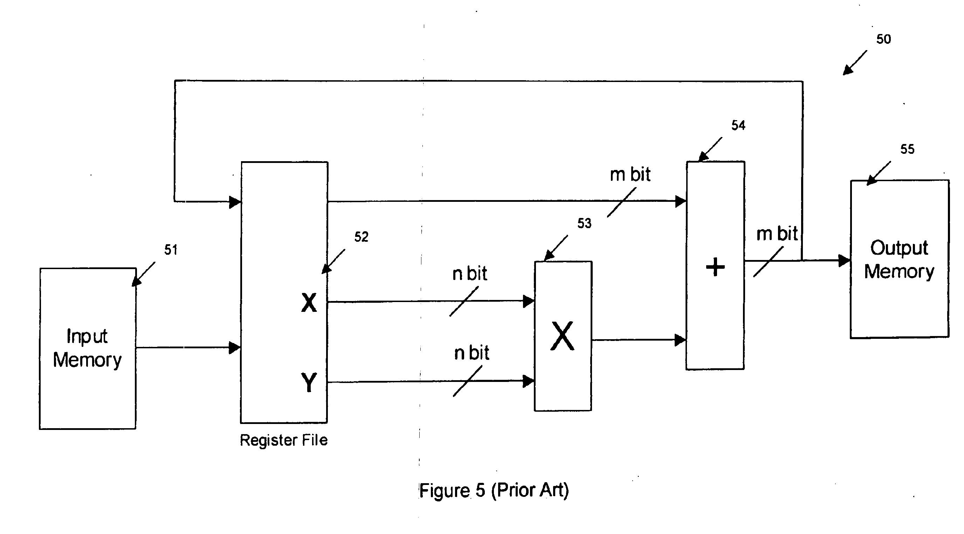

Now with reference to figure 4, a detailed block diagram of a Rake receiver 40 is shown. The Rake receiver 40 comprises a downsampler 43 for performing decimation to chip rate downsampling, a correlator 44 for data and pilot channels, a channel estimation block 42 for comparing the received pilot signal with the reference signal. Using channel estimates, the data is phase corrected by a phase corrector 45. Finally, the path from each finger is added together using a combiner 47. All of these operations can be performed using Multiply-Accumulate (MAC) processing blocks. The correlator uses the pn-correlator mode of a MAC block to despread a signal using pn-codes. The auto-correlation mode of a MAC block is used for the channel estimator to detect the strongest paths. Phase correction is performed using the complex multiplier of a MAC block and the adders of the MAC blocks are used to sum up the results of the fingers. A MAC processing block 50 is shown in Figure 5. A MAC block can perform A+(X*Y) in one cycle. A number of these blocks can be implemented in parallel for high speed processing or as a recursive engine to optimise cost and sharing. As well as being the most common block in the Rake receiver, the MAC block is used in all synchronization operations involving correlation as well as all filtering operations (FIR and IIR).

Existing multimode terminals have dedicated processing blocks devoted to either FFT (OFDM mode) or Muttipty-Accumutate (UMTS mode) functionality. In this sense, these multimode baseband engines are dynamically reconfigurable. Dynamic reconfiguration may be defined as online reconfiguration of a real-time signal processing system without deactivation of the system during the reconfiguration process. In order to achieve this, a degree of flexibility is required in the architecture to allow parts of the system to be reconfigured while other parts continue operating.

As described above, there are two main processing blocks in the most common wireless communications standards, the FFT block is used in WLAN 802.11a and DVB-H and the Rake receiver is used in UMTS. Both blocks require high-speed processing. This has created a need for a dynamically reconfigurable system which can provide both an FFT block and a Rake receiver.

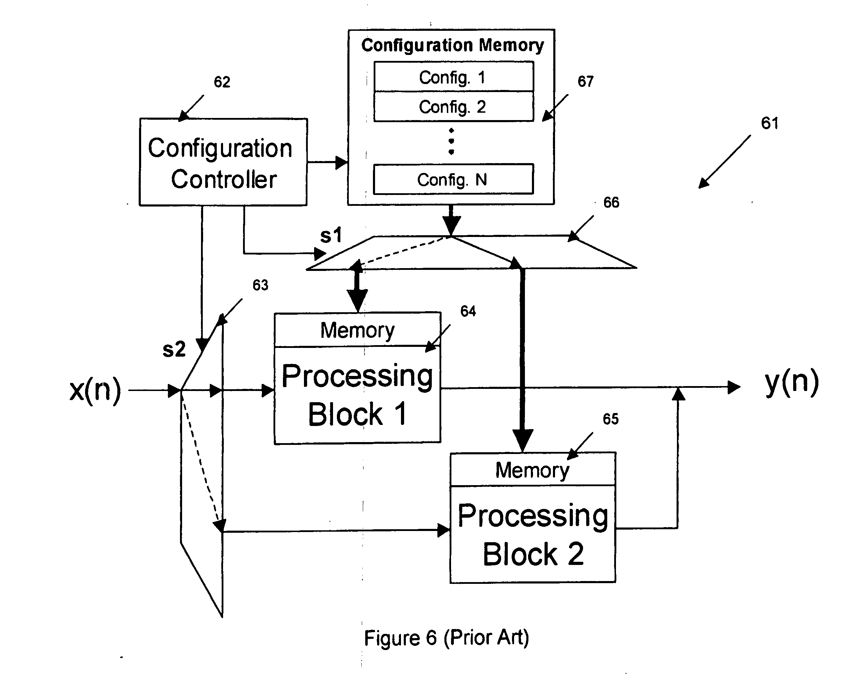

Figure 6 shows a block diagram of a general reconfigurable system 61 according to the prior art. The system 61 comprises a first processing block 64 and a second processing block 65 which perform signal processing operations. Both the first processing block 64 and the second processing block 65 can be fine grain (bit level) blocks, coarse grain blocks (e.g. ALU's) or a chain of blocks performing successive algorithms.

The system also comprises a configuration controller 62 that selects the required configuration stored in a configuration memory 67, and also controls a first multiplexer 66 and a second multiplexer 63. The second multiplexer 63 determines whether the first processing block 64 or the second processing block 65 processes signal x(n). The first multiplexer 66 determines which processing block, either the first processing block 64 or the second processing block 65, is configured, by loading a new configuration into the processing block memory 67.

As shown in figure 6, only one of the first processing block 64 and the second processing block 65 is active during normal operations, while the other processing block is configured with a new configuration representing a software update/upgrade or a different mode of operation, for example, to suit another communication system standard. Thus, known reconfigurable baseband engines waste processing resources. As has been appreciated by the applicant and illustrated above, the most important baseband processing engines found in both of the two most widespread wireless communication systems share many of the same functional elements. The present invention provides a reconfigurable baseband engine which, using shared processing elements, can perform the core processing functions found in both OFDM and UMTS wireless communications systems.

Accordingly, the present invention provides a dynamically shared reconfigurable baseband engine which can be implemented in a multimode terminal supporting a multitude of various radio standards for Cellular (GSM, UMTS), Wireless LAN (IEEE 802.11a/b/g), Personal Area Network (Bluetooth), and Broadcast (DVB-H).

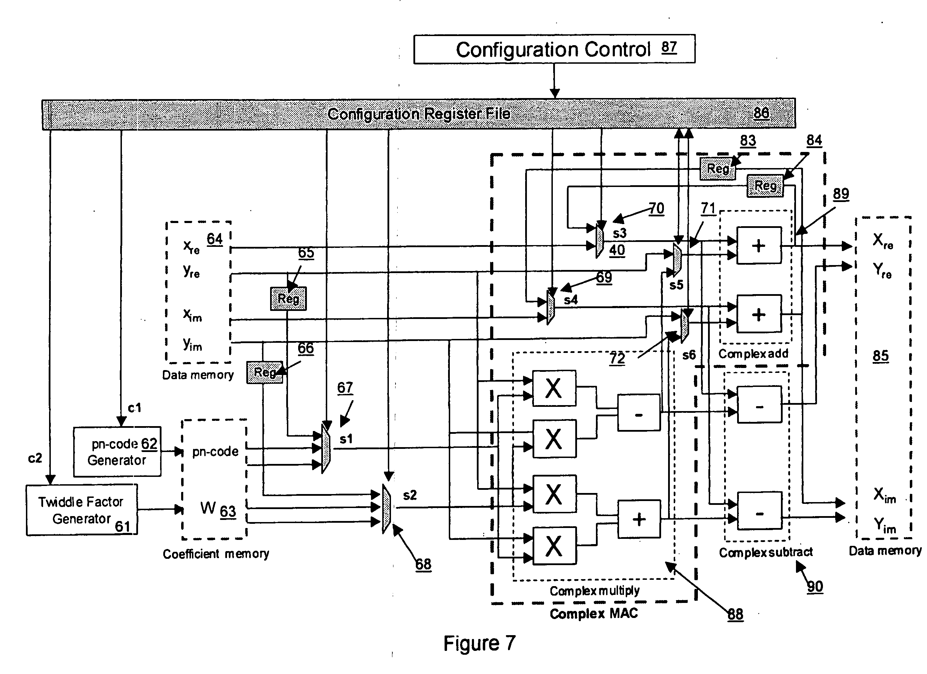

Figure 7 shows the first embodiment of the invention, where a radix-2 butterfly is combined with a complex MAC. This block can be included as a time multiplexed engine as in Figure 2, or a number of these blocks can be combined in parallel for higher speeds.

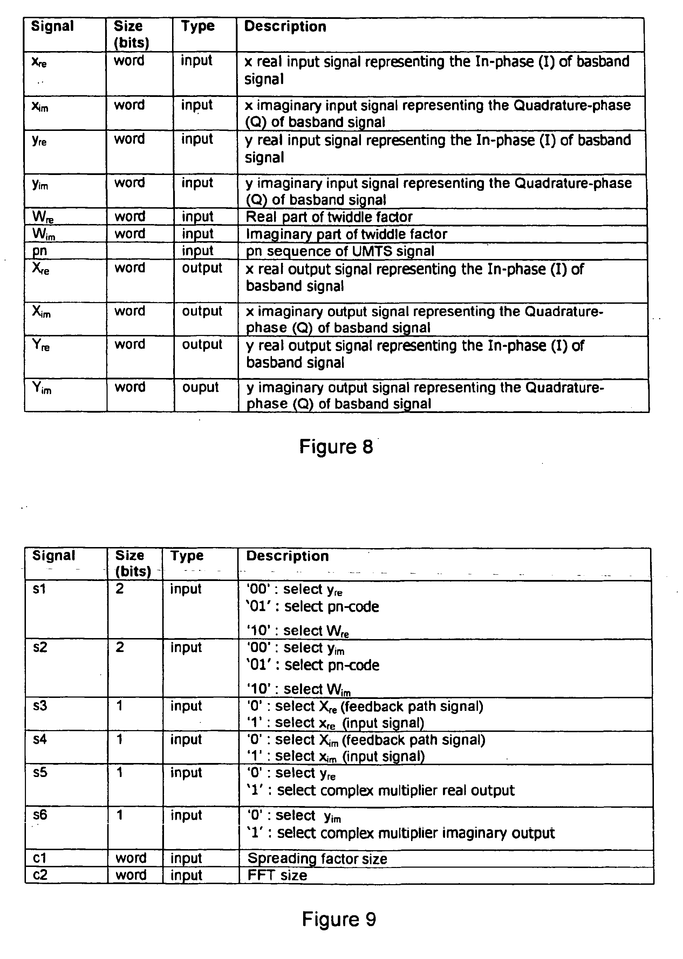

Figure 8 is a table of the signals of the present invention. $X_{re}$, $X_{im}$, $Y_{re}$, $Y_{im}$, $X_{re}$, $X_{mi}$, $Y_{re}$ and $Y_{im}$ are input and output signals which represent the real and imaginary components of the in-phase (I) and quadrature-phase (Q) of the baseband signal. $W_{re}$ and $W_{im}$ are the real and imaginary parts of the complex twiddle factors. Finally, pn is the pn-sequence of the UMTS.

Figure 9 is a table of the various control signals which determine the control modes of the baseband engine. The different control modes are stored in the configuration registers which can be dynamically loaded by the configuration controller. The configuration register file is used to store the configuration control word to select a particular processing function (i.e Butterfly, MAC). The register provide control bits for multiplexers, shift registers and memories. The configurations register file has a size of M (number of stored configurations) x N (configurations bits). New configurations can be stored in the configuration register and subsequently be loaded. After filling the configuration register, in normal operation mode, configurations can be switched. The configuration register can be reconfigured by changing control signals.

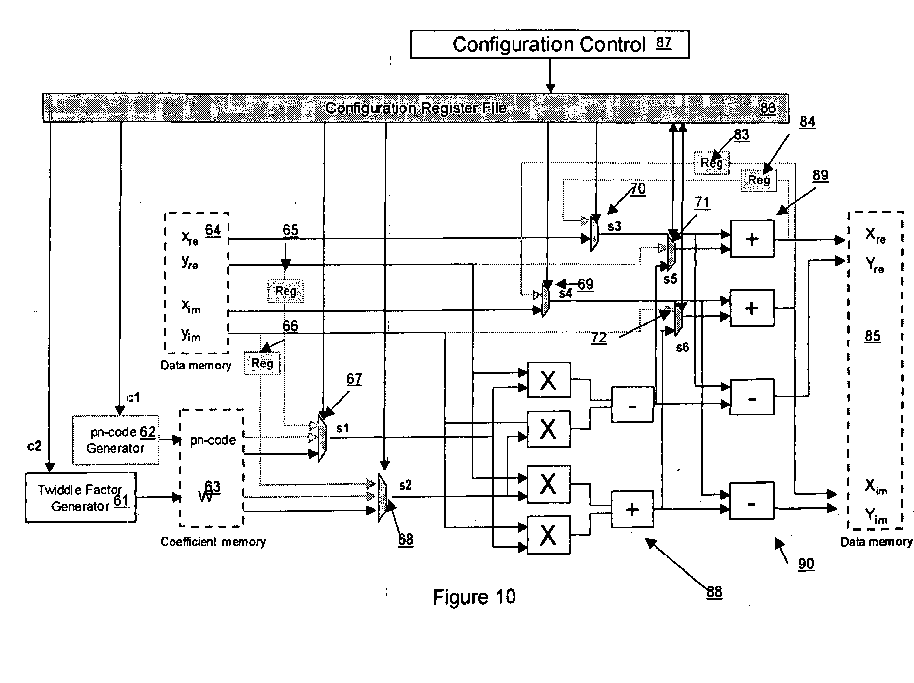

Now with reference to figures 9 and 10, the operation of the present invention, whilst operating in the radix-2 butterfly mode will now be described. First, the configuration control unit 87 configures the configuration register 86 so as to control the baseband engine to implement a radix-2 butterfly stage. In so doing, control signals c1, c2 and s1 to s6 are set as follow.

Control signal c1 sets the FFT size in the in the twiddle factor generator 61, the twiddle factor generator providing the complex twiddle factors to the coefficient memory 63, which in turn provides the same twiddle factors to multiplexers 67 and 68. Control signals s1 and s2 act upon multiplexers 67 and 68 such that the complex twiddle factors output from the coefficient memory 63 are input into complex multiplier block 88. Complex multiplier block 88 multiplies the twiddle factors with signals $y_{re}$ and $y_{im}$. The output of the complex multiplier block 88 is input in to both complex subtract block 90 and multiplexers 71 and 72. Control signals s3 and s4 act upon multiplexers 69 and 70 such that outputs $x_{re}$ and $x_{im}$ are input in to complex adder block 89. Control signals s5 and s6 act upon multiplexers 71 and 72 such that the output of the complex multiply block is input into both the complex add block 89 and the complex subtract block 90. The output of complex add block 89 and complex subtract block 90 is then saved to data memory 85. When configured in such a way, the baseband engine of the present invention provides one stage of a radix-2 butterfly as seen in figure 3. By feeding back the output memory into the input memory, it is possible to implement a full FFT algorithm based on the radix-2 core.

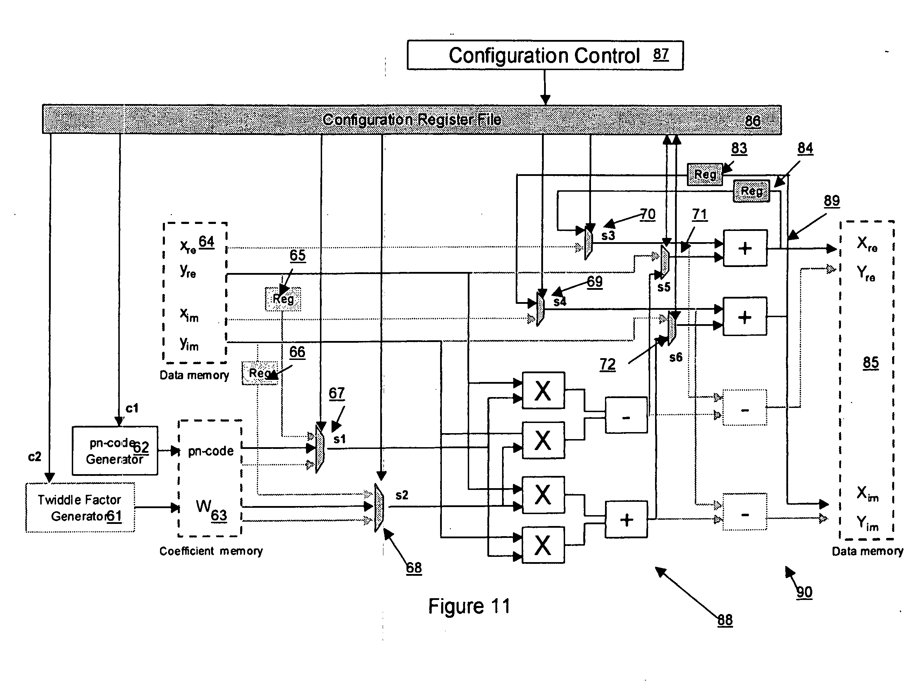

Now, with reference to figures 9 and 11, the operation of the present invention, whilst operating in pn-correlator mode will now be described. In this mode, the MAC circuit is used to de-spread an incoming UMTS signal. First, the configuration control unit 87 configures the configuration register 86 so as to control the baseband engine 60 to implement a pn-correlator. In so doing, control signals c1, c2 and s1 to s6 are set as follow.

Control signal c1 configures pn-code generator 62 with a specific spreading factor size. The pn-code generator 62 then provides the pn-codes to the coefficient memory 63, which in turns provides the pn-codes to multiplexers 67 and 68. Control signals s1 and s2 act upon multiplexers 67 and 68 such that the pn-codes are input in to complex multiplier block 88 and multiplied with signals $Y_{re}$ and $Y_{im}$. The output of the complex multiplier block 88 is input in to multiplexers 71 and 72. Control signals s5 and s6 act upon multiplexers 71 and 72 such that the output of the complex multiplier block 88 is input in to the complex adder block 89. Also, control signals s3 and s4 act upon multiplexers 69 and 70 such that the output signals of the complex adder block 89, after being input into shift registers 83 and 84 having a one symbol delay are fed back into the input of the complex adder block 89. The output of the complex adder block 89 is also input into data memory 85. When configured in such a way, the baseband engine of the present invention provides a pn-correlator as seen in figure 4.

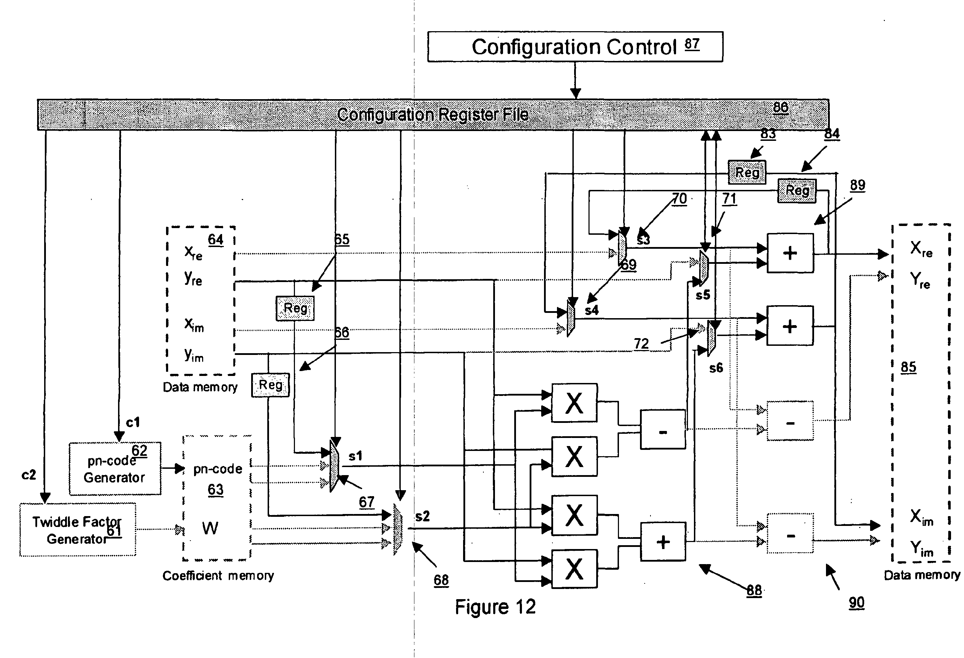

Now with reference to figures 9 and 12, the operation of the present invention, whilst operating in auto-correlator mode will now be described. In this mode, data is selected from the data memory as input to the MAC. First, the configuration control unit 87 configures the configuration register 86 so as to control the baseband engine 60 to implement auto-correlator. In so doing, control signals c1, c2 and s1 to s6 are set as follow.

Control signals s1 and s2 act upon multiplexers 67 and 68 such that signals $y_{re}$ and $y_{im}$ output from the data memory 64, after having been input into a shift registers 65 and 66 having a one symbol delay. are input into the complex multiplier block 88. Also, non-delayed signals $y_{re}$ and $y_{im}$ output from data memory 64 are also input into complex multiplier block 88. The output of complex multiplier block 88 is input into multiplexers 71 and 72. Control signals s5 and s6 act upon multiplexers 71 and 72 such that the output of the complex multiplier block is input into the complex adder block 89. Control signals s3 and s4 act upon multiplexers 69 and 70 such that the output of complex adder block 89 is, after being input into shift registers 83 and 84 having a one symbol delay fed back into the complex adder block 89. The output of the complex adder block 89 is then input into data memory 85.

This engine can also perform filtering operations (FIR or IIR) where filter coefficients are loaded in the coefficient memory operating in the MAC mode to perform the convolution operation. To perform FIR or IIR filtering, the coefficient memory 63 are loaded with filter coefficients instead of twiddle factors or pn-codes and iterative feedback is performed according to the filters length.

The engine can efficiently perform multiply-accumulate or multiply-add-based algorithms like FFT/IFFT, real- and complex-valued FIR-filtering, matrix-vector- or matrix-matrix-multiplications. Algorithms, which can be composed of these basic operations can also be performed, e.g. DCT/IDCT or discrete wavelet transforms. A Discrete Cosine Transform can be derived from the real part of the FFT and Discrete Wavelet transforms can be derived using the FFT function followed by FIR filtering, thereby using the reconfigurable baseband engine first in Butterfly mode and then in MAC mode.

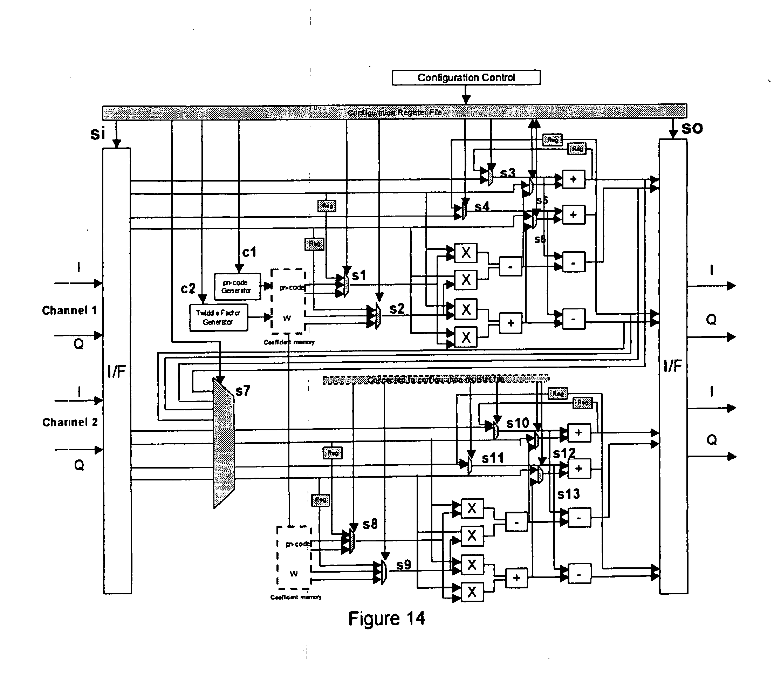

Figure 14 shows a second embodiment of the present invention. The second embodiment of the present invention is a dual core architecture engine which allows two simultaneous channels to operate. For example, one channel may use a butterfly mode and the other a MAC mode. Also the two cores can operate consecutively on one channel only.

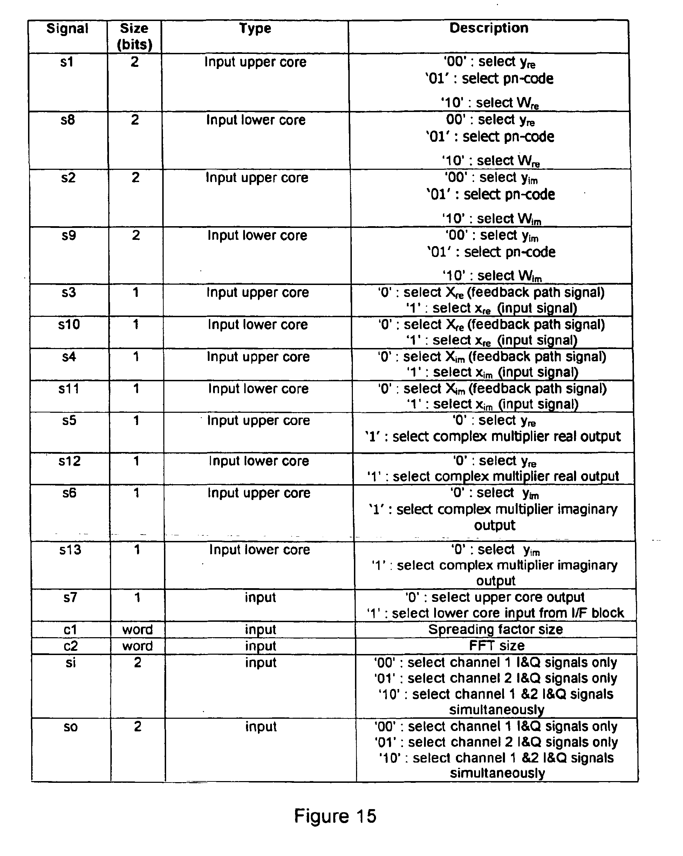

The two cores can be configured separately or simultaneously by the controller using the configuration registers. The control signals for the second embodiment of the present invention are shown in the table of figure 15. The input interface with control signal (si) and the output interface with control signal (so) determine whether one or two channels are selected for processing by the dual core engine. As will be apparent to the skilled reader, the operation of the second embodiment is similar to that of the first.

**Claims**

1.    A reconfigurable processing block for use in a communications system capable of supporting multiple communication formats, the reconfigurable processing block comprising a plurality of modular processing elements, the processing elements comprising:

> pn-code generating means (62); twiddle factor generating means (61); coefficient memory means (63); input data memory means (64); output data memory means (85); delay means (83; 84; 65; 66); complex multiply means (88); complex add means (89); complex subtract means (90); and control means, the control means comprising multiplexers for controlling how the processing elements are interconnected, the reconfigurable processing block being **characterised in that**:

>> the controlling means is arranged such that, in use, it controls the reconfigurable processing block so that it selectively implements one of the following group of circuits:

>>> a radix-2 butterfly core; a pn-correlator; an auto-correlator; and a complex adder; and

> wherein the controlling means comprises a register arranged to receive and store configuration data and to provide a control word to the pn-code generating means, the twiddle factor generating means and the multiplexers; and
> wherein the controlling means is arranged such that the reconfigurable processing block sequentially implements a pn-correlator, in auto-correlator and a complex-adder.

2.    The reconfigurable processing block of claim 1, further comprising:

> means for implementing a radix-2 butterfly Fast Fourier Transform circuit by iteratively feeding the data stored in the output data means back into.the input data means and,

wherein the controlling means is arranged such that the reconfigurable processing block implements a radix-2 butterfly core.

3.    The reconfigurable processing block of claim 1, further comprising:

> means for implementing a Finite Impulse Response filter by iteratively feeding the data stored in the output data means back into the input data means and,
> wherein the controlling means is arranged such that the reconfigurable processing block iteratively implements a radix-2 butterfly core and the twiddle factor generator is generating filter coefficients of the Finite Impulse response filter.

4.    The reconfigurable processing block of claim 1, further comprising:

> means for implementing an Infinite Impulse Response filter by iteratively feeding the data stored in the output data means back into the input data means, and,
> wherein the controlling means is arranged such that the reconfigurable processing block iteratively implements a radix-2 butterfly core and the twiddle factor generator is generating filter coefficients of the Finite Impulse response filter.

5.    A reconfigurable baseband engine for use in a communications system capable of supporting multiple communication formats, the reconfigurable baseband engine comprising a plurality of the reconfigurable processing blocks according to any of claims 1 to 4.

**Patentansprüche**

1.    Rekonfigurierbarer Verarbeitungsblock zur Verwendung in einem Kommunikationssystem, welches geeignet ist, mehrere Kommunikationsformate zu unterstützen, wobei der rekonfigurierbare Verarbeitungsblock eine Vielzahl von modularen Verarbeitungselementen aufweist, wobei die Verarbeitungselemente aufweisen:

> ein pn-Code-Erzeugungsmittel (62); ein Drehfaktor-Erzeugungsmittel (61); ein Koeffizient-Speichermittel (63); ein Eingabedaten-Speichermittel (64); ein Ausgabedaten-Speichermittel (85); ein Verzögerungsmittel (83; 84; 65; 66); ein Komplex-Multipliziermittel (88); ein Komplex-Addiermittel (89); ein Komplex-Subtrahiermittel (90); und ein Steuermittel, wobei das Steuermittel Multiplexer aufweist, zum Steuern, wie die Verarbeitungselemente verbunden werden, wobei der rekonfigurierbare Verarbeitungsblock **dadurch gekennzeichnet ist, dass**:

das Steuermittel so ausgestaltet ist, dass es bei Verwendung den rekonfigurierbaren Verarbeitungsblock so steuert, dass er wahlweise eine der folgenden Gruppen von Schaltungen implementiert:

einen Radix-2 Butterfly-Kern; einen pn-Korrelator; einen Auto-Korrelator; und einen Komplex-Addierer; und wobei das Steuermittel ein Register aufweist, welches zum Empfangen und Speichern von Konfigurationsdaten und zum Bereitstellen eines Steuerungswortes an das pn-Code-Erzeugungsmittel, das Drehfaktor-Erzeugungsmittel und die Multiplexer ausgestaltet ist; und wobei das Steuermittel so ausgestaltet ist, dass der rekonfigurierbare Verarbeitungsblock folgend einen pn-Korrelator, einen Auto-Korrelator und einen Komplex-Addierer implementiert.

2. Rekonfigurierbarer Verarbeitungsblock nach Anspruch 1, ferner mit:

einem Mittel zum Implementieren einer Radix-2-Butterfly schnellen Fourier-Transformationsschaltung durch iteratives Zuführen der Daten, die in dem Ausgabedatenmittel gespeichert sind, zurück in das Eingabedatenmittel und,

wobei das Steuermittel so ausgestaltet ist, dass der rekonfigurierbare Verarbeitungsblock einen Radix-2-Butterfly-Kern implementiert.

3. Rekonfigurierbarer Verarbeitungsblock nach Anspruch 1, ferner mit:

einem Mittel zum Implementieren eines Filters mit endlicher Impulsantwort durch iteratives Zuführen der Daten, die in dem Ausgabedatenmittel gespeichert sind, zurück in das Eingabedatenmittel und, wobei das Steuermittel so ausgestaltet ist, dass der rekonfigurierbare Verarbeitungsblock iterativ einen Radix-2-Butterfly-Kern implementiert und der Drehfaktorgenerator Filterkoeffizienten des Filters mit endlicher Impulsantwort erzeugt.

4. Rekonfigurierbarer Verarbeitungsblock nach Anspruch 1, ferner mit:

einem Mittel zum Implementieren eines Filters mit unendlicher Impulsantwort durch iteratives Zuführen der Daten, die in dem Ausgabedatenmittel gespeichert sind, zurück in das Eingabedatenmittel, und wobei das Steuermittel so ausgestaltet ist, dass der rekonfigurierbare Verarbeitungsblock iterativ einen Radix-2-Butterfly-Kern implementiert und der Drehfaktorgenerator Filterkoeffizienten des Filters mit unendlicher Impulsantwort erzeugt.

5. Rekonfigurierbare Baseband Engine zur Verwendung in einem Kommunikationssystem, welches geeignet ist, mehrere Kommunikationsformate zu unterstützen, wobei die rekonfigurierbare Baseband Engine eine Vielzahl der rekonfigurierbaren Verarbeitungsblöcke nach irgendeinem von Ansprüchen 1 bis 4 aufweist.

**Revendications**

1. Bloc de traitement reconfigurable destiné à une utilisation dans un système de communications capable de supporter de multiples formats de communication, le bloc de traitement reconfigurable comprenant une pluralité d'éléments de traitement modulaires, les éléments de traitement comprenant :

des moyens de génération de code pn (62) ; des moyens de génération de facteur de rotation (61) ; des moyens de mémoire de coefficient (63) ; des moyens de mémoire de données d'entrée (64) ; des moyens de mémoire de données de sortie (85) ; des moyens de retard (83 ; 84 ; 65 ; 66) ; des moyens de multiplication complexes (88) ; des moyens d'addition complexes (89) ; des moyens de soustraction complexes (90) ; et des moyens de commande, les moyens de commande comprenant des multiplexeurs pour commander la manière dont les éléments de traitement sont interconnectés, le bloc de traitement reconfigurable étant **caractérisé en ce que** :

les moyens de commande sont agencés de sorte que, en utilisation, ils commandent le bloc de traitement reconfigurable de sorte qu'il mette en oeuvre sélectivement un du groupe de circuits suivant :

un noyau papillon de base 2 ; un corrélateur pn ; un auto-corrélateur ; et un additionneur complexe ; et

dans lequel les moyens de commande comprennent un registre agencé pour recevoir et stocker des données de configuration et pour fournir un mot de commande aux moyens de génération de code pn, aux moyens de génération de facteur de rotation et aux multiplexeurs ; et

dans lequel les moyens de commande sont agencés de sorte que le bloc de traitement reconfigurable mette en oeuvre séquentiellement un corrélateur pn, un auto-corrélateur et un additionneur complexe.

2. Bloc de traitement reconfigurable selon la revendication 1, comprenant en outre :

des moyens pour mettre en oeuvre un circuit de transformation de Fourier rapide papillon de base 2 en réintroduisant itérativement les données stockées dans les moyens de données de sortie, dans les moyens de données d'entrée et,

dans lequel les moyens de commande sont agencés de sorte que le bloc de traitement reconfigurable mette en oeuvre un noyau papillon de base 2.

3. Bloc de traitement reconfigurable selon la revendication 1, comprenant en outre :

des moyens pour mettre en oeuvre un filtre à réponse impulsionnelle finie en réintroduisant itérativement les données stockées dans les moyens de données de sortie, dans les moyens de données d'entrée et,

dans lequel les moyens de commande sont agencés de sorte que le bloc de traitement reconfigurable mette en oeuvre itérativement un noyau papillon de base 2 et le générateur de facteur de rotation génère des coefficients de filtre du filtre à réponse impulsionnelle finie.

4. Bloc de traitement reconfigurable selon la revendication 1, comprenant en outre :

des moyens pour mettre en oeuvre un filtre à réponse impulsionnelle finie en réintroduisant itérativement les données stockées dans les moyens de données de sortie, dans les moyens de données d'entrée et,

dans lequel les moyens de commande sont agencés de sorte que le bloc de traitement reconfigurable mette en oeuvre itérativement un noyau papillon de base 2 et le générateur de facteur de rotation génère des coefficients de filtre du filtre à réponse impulsionnelle finie.

5. Moteur de bande de base reconfigurable destiné à une utilisation dans un système de communications capable de supporter de multiples formats de communication, le moteur de bande de base reconfigurable comprenant une pluralité des blocs de traitement reconfigurables selon l'une quelconque des revendications 1 à 4.

Figure 1 (Prior Art)

EP 1 758 030 B1

Figure 2 (Prior Art)

EP 1 758 030 B1

Figure 3 (Prior Art)

**Figure 4 (Prior Art)**

Pilot

Channel Estimation

40

Paths are aligned and added coherently

43

Decimation to chip rate

Correlator

44

42

Phase Correction

45

Derotates data using channel estimates

47

Orthogonal Codes Data / Pilot

From Other Fingers

EP 1 758 030 B1

Figure 5 (Prior Art)

EP 1 758 030 B1

Figure 6 (Prior Art)

EP 1 758 030 B1

Figure 7

| Signal | Size (bits) | Type | Description |
|---|---|---|---|
| $x_{re}$ | word | input | x real input signal representing the In-phase (I) of basband signal |
| $x_{im}$ | word | input | x imaginary input signal representing the Quadrature-phase (Q) of basband signal |
| $y_{re}$ | word | input | y real input signal representing the In-phase (I) of basband signal |
| $y_{im}$ | word | input | y imaginary input signal representing the Quadrature-phase (Q) of basband signal |
| $W_{re}$ | word | input | Real part of twiddle factor |
| $W_{im}$ | word | input | Imaginary part of twiddle factor |
| pn | | input | pn sequence of UMTS signal |
| $X_{re}$ | word | output | x real output signal representing the In-phase (I) of basband signal |
| $X_{im}$ | word | output | x imaginary output signal representing the Quadrature-phase (Q) of basband signal |
| $Y_{re}$ | word | output | y real output signal representing the In-phase (I) of basband signal |
| $Y_{im}$ | word | ouput | y imaginary output signal representing the Quadrature-phase (Q) of basband signal |

Figure 8

| Signal | Size (bits) | Type | Description |
|---|---|---|---|
| s1 | 2 | input | '00' : select $y_{re}$ <br> '01' : select pn-code <br> '10' : select $W_{re}$ |
| s2 | 2 | input | '00' : select $y_{im}$ <br> '01' : select pn-code <br> '10' : select $W_{im}$ |
| s3 | 1 | input | '0' : select $X_{re}$ (feedback path signal) <br> '1' : select $x_{re}$ (input signal) |
| s4 | 1 | input | '0' : select $X_{im}$ (feedback path signal) <br> '1' : select $x_{im}$ (input signal) |
| s5 | 1 | input | '0' : select $y_{re}$ <br> '1' : select complex multiplier real output |
| s6 | 1 | input | '0' : select $y_{im}$ <br> '1' : select complex multiplier imaginary output |
| c1 | word | input | Spreading factor size |
| c2 | word | input | FFT size |

Figure 9

Figure 10

Figure 11

Figure 12

EP 1 758 030 B1

Figure 13

Figure 14

| Signal | Size (bits) | Type | Description |
|---|---|---|---|
| s1 | 2 | Input upper core | '00' : select $y_{re}$<br>'01' : select pn-code<br>'10' : select $W_{re}$ |
| s8 | 2 | Input lower core | '00' : select $y_{re}$<br>'01' : select pn-code<br>'10' : select $W_{re}$ |
| s2 | 2 | Input upper core | '00' : select $y_{im}$<br>'01' : select pn-code<br>'10' : select $W_{im}$ |
| s9 | 2 | Input lower core | '00' : select $y_{im}$<br>'01' : select pn-code<br>'10' : select $W_{im}$ |
| s3 | 1 | Input upper core | '0' : select $X_{re}$ (feedback path signal)<br>'1' : select $x_{re}$ (input signal) |
| s10 | 1 | Input lower core | '0' : select $X_{re}$ (feedback path signal)<br>'1' : select $x_{re}$ (input signal) |
| s4 | 1 | Input upper core | '0' : select $X_{im}$ (feedback path signal)<br>'1' : select $x_{im}$ (input signal) |
| s11 | 1 | Input lower core | '0' : select $X_{im}$ (feedback path signal)<br>'1' : select $x_{im}$ (input signal) |
| s5 | 1 | Input upper core | '0' : select $y_{re}$<br>'1' : select complex multiplier real output |
| s12 | 1 | Input lower core | '0' : select $y_{re}$<br>'1' : select complex multiplier real output |
| s6 | 1 | Input upper core | '0' : select $y_{im}$<br>'1' : select complex multiplier imaginary output |
| s13 | 1 | Input lower core | '0' : select $y_{im}$<br>'1' : select complex multiplier imaginary output |
| s7 | 1 | input | '0' : select upper core output<br>'1' : select lower core input from I/F block |
| c1 | word | input | Spreading factor size |
| c2 | word | input | FFT size |
| si | 2 | input | '00' : select channel 1 I&Q signals only<br>'01' : select channel 2 I&Q signals only<br>'10' : select channel 1 &2 I&Q signals simultaneously |
| so | 2 | input | '00' : select channel 1 I&Q signals only<br>'01' : select channel 2 I&Q signals only<br>'10' : select channel 1 &2 I&Q signals simultaneously |

Figure 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003154357 A